# EUROPÄISCHE PATENTSCHRIFT

(11) **EP 4 417 038 B1**
(45) Veröffentlichungstag und Bekanntmachung des Hinweises auf die Patenterteilung: **04.06.2025**
(21) Anmeldenummer: 24153328.0
(22) Anmeldetag: 23.01.2024
(51) Int. Cl.: A01F 15/14, B65B 13/32, A01F 15/08

(54) **BINDEANORDNUNG FÜR EINE BALLENPRESSE**
TYING ARRANGEMENT FOR A BALER
AGENCEMENT DE LIAGE POUR PRESSE À BALLES

(30) Priorität: 14.02.2023 DE 102023103531
(43) Veröffentlichungstag der Anmeldung: 21.08.2024
(73) Patentinhaber: Maschinenfabrik Bernard Krone GmbH & Co. KG, 48480 Spelle (DE)
(72) Erfinder: QUAST, David, 48431 Rheine (DE)

(56) Entgegenhaltungen:
- EP-A1- 3 391 733
- EP-A1- 3 932 184
- WO-A1-2017/160199
- WO-A1-93/13988
- US-A1- 2016 021 825

## Beschreibung

Die vorliegende Erfindung betrifft eine Bindeanordnung für eine Ballenpresse nach dem Oberbegriff von Anspruch 1 sowie eine Ballenpresse mit einer solchen Bindeanordnung nach Anspruch 15.

Ballenpressen werden in der Landwirtschaft eingesetzt, um Erntegut wie zum Beispiel Heu oder Stroh, welches zuvor aufgenommen wurde, zu Ballen zu verpressen. Das Erntegut wird normalerweise durch eine Pick-up, die in die Ballenpresse integriert ist, vom Boden aufgenommen. Im Falle einer Quaderballenpresse erfolgt das Verpressen des aufgesammelten Ernteguts in zwei Stufen. Zunächst wird das von der Pick-up übernommene und gegebenenfalls durch eine Schneidvorrichtung geschnittene Erntegut durch eine Fördervorrichtung und/oder Sammelvorrichtung innerhalb einer Sammelkammer weitergefördert und dabei gerafft und/oder vorverdichtet. Der Sammelkammer ist eine Presskammer oder ein Presskanal nachgeordnet. Dort wirkt ein oszillierender Presskolben auf das Erntegut ein und führt das eigentliche Verpressen durch. Es wird somit vorverdichtetes Erntegut portionsweise in den Presskanal überführt, wo ein sukzessiver Aufbau des Quaderballens erfolgt.

Wenn der Quaderballen eine vorgesehene Größe erreicht hat, wird er mittels eines Bindemittels gebunden, bevor er ausgeworfen wird. Bei dem Bindemittel kann es sich zum Beispiel um ein thermoplastisches Band handeln. Dieses wird schleifenförmig um den Ballen gelegt, wobei zwei Enden eines Bindemittelstrangs durch Reibschweißen miteinander verbunden werden, wofür jeweils eine Schweißeinheit für jeden Bindemittelstrang vorgesehen ist. Vor, während und nach dem Schweißvorgang ist es notwendig, einen oder mehrere Strangabschnitte mittels Klemmeinheiten zu sichern. Im Stand der Technik ist es bekannt, jede einzelne Schweißeinheit mit einem eigenen Druckluftmotor zu betreiben. Dieses System funktioniert zuverlässig, bringt allerdings verschiedene Nachteile mit sich. Durch die Mehrzahl von Motoren im Bereich der Schweißeinheiten wird der Bauraum, der durch die benachbarten Klemmeinheiten und andere Elemente ohnehin begrenzt ist, weiter eingeschränkt. Die Situation verkompliziert sich weiter, da der Motor zusammen mit der Schweißeinheit verstellt werden muss, wenn diese zwischen einer Schweißposition und einer Passivposition wechselt. Durch die Mehrzahl von Motoren erhöhen sich die Produktionskosten und der Druckluftverbrauch.

EP 3 391 733 A1 offenbart eine gattungsgemäße Bindeanordnung.

Aufgabe der Erfindung ist es, bei einer Bindeanordnung einer Ballenpresse eine verbesserte Möglichkeit zum Betrieb der Schweißeinheiten vorzuschlagen.

Die Aufgabe wird gelöst mit einer Bindeanordnung für eine Ballenpresse, mit den Merkmalen des unabhängigen Patentanspruchs 1. Vorteilhafte Ausführungsformen sind den abhängigen Ansprüchen entnehmbar.

Dafür wird eine Bindeanordnung geschaffen für eine Ballenpresse, welche dazu eingerichtet ist, einen Erntegutballen in einem Presskanal zu formen und mit wenigstens einem strangförmigen Bindemittel zu umhüllen, wobei die Bindeanordnung eine Mehrzahl von bezüglich einer Querachse zueinander versetzten Schweißeinheiten aufweist, von denen jede einen oszillierend antreibbaren Reibkopf zum Reibverschweißen zweier Strangabschnitte wenigstens eines Bindemittelstrangs aufweist, wobei die Bindeanordnung wenigstens einen Schweißmotor zum Antrieb der Reibköpfe aufweist.

Bei der Ballenpresse handelt es sich normalerweise um eine Quaderballenpresse oder Großpackenpresse. Die Ballenpresse kann selbstfahrend mit eigenem Fahrantrieb oder als Anhänger ohne eigenen Fahrantrieb ausgebildet sein. Sie weist einen Presskanal auf, in welchem die eigentliche Ballenformung und der Pressvorgang erfolgen. Der Presskanal weist eine Kanallängsachse auf, zu welcher er normalerweise wenigstens überwiegend parallel verläuft. Die Kanallängsachse kann mit einer Längsachse der Ballenpresse übereinstimmen, sie kann aber auch gegenüber derselben geneigt sein. Typischerweise ist im Presskanal ein Presskolben angeordnet, der dazu eingerichtet ist, durch eine oszillierende Bewegung auf das Erntegut einzuwirken und es so zu verpressen. Hinsichtlich des Erntegutflusses ist dem Presskanal in der Regel eine Sammelkammer vorgeschaltet, in welcher eine Fördervorrichtung und/oder Sammelvorrichtung dazu eingerichtet ist, das Erntegut weiterzufördern und dabei vorzuverdichten.

Um die Form des fertigen Ballens zu sichern, wird er innerhalb des Presskanals mit einem Bindemittel versehen. Bei dem Bindemittel, welches auch als Bindematerial bezeichnet werden kann, kann es sich insbesondere um ein thermoplastisches Band handeln (zum Beispiel aus PET). Es wird normalerweise in einer Mehrzahl von separaten Schleifen, die quer zur Kanallängsachse beabstandet sind, um den Ballen gelegt. In jedem Fall erfolgt ein Umhüllen des Erntegutballens mit Bindemittel. Die Bindeanordnung dient dabei vornehmlich dazu, zwei Strangabschnitte eines Bindemittelstrangs zu verbinden und somit eine der Schleifen ringförmig um den Erntegutballen zu schließen. In der Regel ist für jede Schleife eine eigene Bindevorrichtung der Bindeanordnung vorgesehen, so dass die Ballenpresse eine Mehrzahl von Bindevorrichtungen, zum Beispiel zwischen zwei und acht Bindevorrichtungen, aufweisen kann.

Die Bindeanordnung weist eine Mehrzahl von bezüglich einer Querachse zueinander versetzten Schweißeinheiten auf. Die Querachse ist hier und im Folgenden allgemein eine Querachse der Bindeanordnung, die allerdings in aller Regel mit einer Querachse der Ballenpresse gleichzusetzen ist. Entsprechendes gilt für die Längsachse und die Hochachse. Bevorzugt kann jede Schweißeinheit Teil einer oben genannten Bindevorrichtung sein, welche noch weitere Elemente aufweisen kann, insbesondere wenigstens eine Klemmeinheit. Normalerweise dient jede der Schweißeinheiten dazu, eine der oben genannten Schleifen zu schließen, indem zwei Abschnitte desselben Bindemittelstrangs verschweißt werden. Die Schweißeinheiten, ebenso wie die Bindevorrichtungen, können identisch ausgebildet sein. Jede Schweißeinheit weist einen oszillierend antreibbaren Reibkopf auf, zum Reibverschweißen zweier Strangabschnitte wenigstens eines Bindemittelstrangs. Der Reibkopf weist eine Reibfläche auf, die normalerweise entlang einer Ebene ausgerichtet ist, allerdings ein Profil aufweisen kann, also gegebenenfalls nicht vollständig eben und glatt ist. Der Reibkopf wird mit einem Strangabschnitt in Kontakt gebracht, während dieser an dem anderen Strangabschnitt anliegt. Um einen ausreichenden Anpressdruck und einen ausreichenden Kraft- und/oder Formschluss zwischen Reibkopf und Strangabschnitt zu gewährleisten, kann die Schweißeinheit einen Reibkopf-Gegenhalter aufweisen, an dem die beiden Strangabschnitte auf einer dem Reibkopf gegenüberliegenden Seite anliegen. Wie nachfolgend noch erläutert wird, kann der Reibkopf-Gegenhalter gleichzeitig ein Klemmelement einer benachbarten Klemmeinheit sein oder mit einem solchen verbunden sein. Das eigentliche Verschweißen erfolgt dadurch, dass der Reibkopf oszillierend bewegt wird, wodurch Reibung zwischen ihm und einem Strangabschnitt, zwischen den Strangabschnitten, und/oder zwischen einem Strangabschnitt und dem Reibkopf-Gegenhalter erzeugt wird. Hierdurch kommt es zu einer Erwärmung sowie Plastifizierung oder auch teilweisen Verflüssigung des Bindematerials, wodurch sich die beiden Strangabschnitte durch einen Stoffschluss verbinden. Die entsprechende Verbindung bleibt auch nach einer Abkühlung und vollständigen Verfestigung des Bindematerials bestehen. Der Reibkopf, welcher als Stoffschlusserzeuger dient, kann an einem Reibkopfträger beweglich gelagert sein, gegenüber welchem er seine oszillierende Bewegung ausführt. Der Reibkopfträger kann dabei aus mehreren Einzelteilen bestehen, von denen einige gegebenenfalls keinen Kontakt mit dem Reibkopf haben.

Die Bindeanordnung weist außerdem wenigstens einen Schweißmotor zum Antrieb der Reibköpfe auf. Der wenigstens eine Schweißmotor ist dazu eingerichtet, wenigstens während des Schweißvorgangs eine Antriebskraft zu erzeugen, die auf die Reibköpfe übertragbar ist, um diese anzutreiben.

Erfindungsgemäß weist die Bindeanordnung ein Getriebe auf zur gleichzeitigen Antriebsverbindung eines Schweißmotors mit einer Mehrzahl von Reibköpfen. Das heißt, die Antriebskraft eines einzigen Schweißmotors kann mittels des Getriebes aufgeteilt und zum gleichzeitigen Antrieb mehrerer Reibköpfe genutzt werden. Generell kann das Getriebe beliebige Elemente zur Übertragung, Umlenkung, Übersetzung und/oder Untersetzung einer Kraft und/oder eines Drehmoments aufweisen. Insgesamt dient das Getriebe dazu, den Kraftfluss von einem Schweißmotor zu mehreren Reibköpfen zu verzweigen. Besonders bevorzugt ist das Getriebe zur gleichzeitigen Antriebsverbindung eines Schweißmotors mit allen Reibköpfen ausgebildet, das heißt die Antriebskraft eines Schweißmotors wird durch das Getriebe auf sämtliche Reibköpfe verteilt. Bevorzugt ist das Getriebe an genau einen Schweißmotor gekoppelt, wenngleich es im Rahmen der Erfindung denkbar wäre, dass zum Beispiel zwei Schweißmotoren jeweils anteilig eine Antriebskraft in das Getriebe einbringen, die vom Getriebe in der beschriebenen Weise auf die Reibköpfe verteilt wird. Die Verteilung der Antriebskraft kann zu gleichen Teilen erfolgen, es wäre aber auch denkbar, dass einige Reibköpfe stärker angetrieben werden als andere. Da die Reibköpfe nur während eines Teils des Bindevorgangs eingesetzt werden, welcher wiederum nur einen (normalerweise kleinen) Teil eines Ballenbildungs- und Bindezyklus ausmacht, ist es sinnvoll, sie nicht durchgehend anzutreiben. Dabei ist es möglich, entweder den Schweißmotor zu deaktivieren oder die Kraftübertragung durch das Getriebe zu unterbrechen. Das heißt das Getriebe kann optional eine Kupplung aufweisen, die zeitweise getrennt werden kann.

Ein wesentlicher Vorteil der Erfindung liegt darin, dass die Anzahl der notwendigen Schweißmotoren wesentlich reduziert werden kann, typischerweise auf einen einzigen Schweißmotor. Im Vergleich zu einer Bindeanordnung, bei welcher jeder Reibkopf durch einen eigenen Schweißmotor angetrieben wird, ergibt sich hierdurch in aller Regel ein Kostenvorteil und/oder ein Gewichtsvorteil, selbst wenn der einzelne Schweißmotor bei der erfindungsgemäßen Bindeanordnung für sich genommen schwerer und/oder teurer ist. Diese Vorteile werden auch nicht durch das erfindungsgemäß notwendige Getriebe zunichte gemacht. Vor allem ergeben sich Vorteile hinsichtlich des zur Verfügung stehenden Bauraums, da der einzelne Schweißmotor in aller Regel weniger Bauraum einnimmt als eine Mehrzahl von Schweißmotoren in ihrer Gesamtheit. Außerdem kann der einzelne Schweißmotor an einer geeigneten Position mit ausreichend Bauraum angeordnet werden, von welcher aus die Antriebskraft durch das Getriebe zu den einzelnen Reibköpfe übertragen wird. Das Getriebe wiederum lässt sich durch kleine und/oder schlanke Bauteile realisieren, so dass unterschiedlichen Reibköpfen zugeordnete Getriebekomponenten nicht miteinander kollidieren. Ein weiterer Vorteil besteht darin, dass eine geringere Anzahl an Versorgungsleitungen zum Betrieb eines einzelnen Schweißmotors nötig ist als zum Betrieb mehrerer Schweißmotoren.

Bauart und Antrieb des Schweißmotors sind grundsätzlich im Rahmen der Erfindung nicht festgelegt. Es ist allerdings stark bevorzugt, dass der Schweißmotor als Hydraulikmotor ausgebildet ist. Der Hydraulikmotor ist an einen Hydraulikkreislauf angeschlossen und wird durch diesen angetrieben. Diese Ausgestaltung ist zum einen vorteilhaft, da ein Hydrauliksystem in der Regel ohnehin für verschiedene Elemente der Ballenpresse notwendig ist und somit nicht eigens für den Hydraulikmotor geschaffen werden muss. Außerdem ist die mögliche erreichbare Drehzahl bei einem Hydraulikmotor allgemein weniger abhängig von der Last - also in der Regel dem aufzubringenden Drehmoment - als bspw. bei einem pneumatischen oder elektrischen Schweißmotor. Dies gilt auch dann, wenn der Hydraulikmotor vergleichsweise klein baut. Typischerweise ist das Hydrauliksystem an eine externe Hydraulikversorgung angeschlossen, die typischerweise durch einen Antriebsmotor eines Schleppers angetrieben wird, oder es wird durch wenigstens eine Pumpe der Ballenpresse mit Druck beaufschlagt, die wiederum mechanisch an den Antriebsmotor gekoppelt ist. Die jeweils vom Hydraulikmotor erreichbare Drehzahl ist normalerweise proportional zur Drehzahl des Antriebsmotors. Da Letztere variieren kann, ergibt sich eine ebenfalls situationsabhängig unterschiedliche Drehzahl des Hydraulikmotors und hieraus resultierend eine unterschiedliche Oszillationsfrequenz des einzelnen Reibkopfs. Einerseits bewegen sich die sich hieraus ergebenden Variationen allerdings normalerweise in einem überschaubaren Rahmen, so dass auch bei niedriger Drehzahl des Antriebsmotors noch ein effektives Verschweißen möglich ist. Andererseits kann eine geringere Oszillationsfrequenz des Reibkopfs dadurch kompensiert werden, dass er länger auf die Strangabschnitte einwirkt. Entsprechend kann durch ein kürzeres Einwirken des Reibkopfs bei hoher Oszillationsfrequenz verhindert werden, dass es zu einem Überhitzen und somit zu einer Schädigung der Strangabschnitte kommt. Dieser Aspekt wird weiter unten noch thematisiert.

Bevorzugt weist das Getriebe eine Verteileranordnung auf, die den Schweißmotor mit einer Mehrzahl von Übertragungswegen verbindet, von denen jeder an einen Reibkopf gekoppelt ist. Die Verzweigung des Kraftflusses und somit die Aufteilung der Antriebskraft erfolgt bei dieser Ausführungsform durch die Verteileranordnung. Diese kann auch als Verteilergetriebe bezeichnet werden. Man könnte auch das Getriebe in seiner Gesamtheit als Verteilergetriebe charakterisieren, wobei die Verteileranordnung als Verteilerabschnitt bezeichnet werden kann. Die Verteileranordnung ist mit dem Schweißmotor verbunden und empfängt von diesem die Antriebskraft. Des Weiteren ist sie mit einzelnen Übertragungswegen verbunden, an welche sie die Antriebskraft anteilig weitergibt. Im jeweiligen Übertragungsweg erfolgt bevorzugt keine Aufteilung der Antriebskraft mehr, sondern lediglich eine Übertragung, optional verbunden mit einer Unter- oder Übersetzung. Sowohl die Verteileranordnung als auch der jeweilige Übertragungsweg können ein oder mehrere Elemente aufweisen.

Gemäß einer Ausgestaltung sind die Reibköpfe bezüglich der Längsachse vom Schweißmotor beabstandet, wobei jeder Übertragungsweg eine sich wenigstens anteilig entlang der Längsachse erstreckende Übertragungswelle aufweist. Diese Ausgestaltung ermöglicht ein hohes Maß an Gestaltungsfreiheit in Bezug auf die Positionierung des Schweißmotors. Er kann in einer Position angeordnet sein, in der ausreichend Bauraum verfügbar ist. Der Abstand entlang der Längsachse wird wenigstens teilweise, bevorzugt überwiegend, durch die Übertragungswellen überbrückt. Die Verteileranordnung kann dagegen eine vergleichsweise geringe Ausdehnung in Richtung der Längsachse aufweisen und sich überwiegend entlang der Querachse erstrecken. Alle Längswellen können parallel zueinander verlaufen. Insbesondere können sie parallel zur Längsachse verlaufen.

Die Kraftübertragung vom Schweißmotor auf die jeweilige Übertragungswelle könnte in unterschiedlicher Weise erfolgen, zum Beispiel über Zahnräder und/oder Ketten. Insbesondere aufgrund der normalerweise hohen Geschwindigkeiten beziehungsweise Drehzahlen innerhalb des Getriebes ist es allerdings bevorzugt, dass die Übertragungswelle schweißmotorseitig eine erste Wellen-Riemenscheibe aufweist, welche mit einem Antriebsriemen der Verteileranordnung zusammenwirkt. Das heißt die Verteileranordnung weist wenigstens einen Antriebsriemen auf, der zum Beispiel als Zahnriemen ausgebildet sein kann. Dieser überträgt die direkt oder indirekt vom Schweißmotor kommende Antriebskraft auf die Übertragungswelle, indem er mit der mit der ersten Wellen-Riemenscheibe eingreift. Im Fall eines Zahnriemens handelt es sich um eine ebenfalls gezahnte Riemenscheibe. Es ist möglich, dass eine Übertragungswelle schweißmotorseitig zwei erste Wellen-Riemenscheiben aufweist, die mit zwei Antriebsriemen zusammenwirken. Die Antriebskraft kann über eine erste Wellen-Riemenscheibe auf die Übertragungswelle übertragen werden und über die andere erste Wellen-Riemenscheibe weitergegeben werden.

Hinsichtlich Anzahl und Anordnung der Antriebsriemen der Verteileranordnung sind unterschiedlichste Möglichkeiten gegeben. Es wären Ausgestaltungen denkbar, bei denen die Anzahl der Antriebsriemen der Anzahl der Übertragungswellen entspricht. Andererseits wäre es auch denkbar, dass die Antriebskraft durch einen einzigen Antriebsriemen vom Schweißmotor auf sämtliche Übertragungswellen übertragen wird. Eine vorteilhafte Ausgestaltung sieht vor, dass die Verteileranordnung einen Schweißmotor-Antriebsriemen aufweist, der mit einer direkt an den Schweißmotor gekoppelten Schweißmotor-Riemenscheibe und wenigstens einer ersten Wellen-Riemenscheibe zusammenwirkt, sowie wenigstens einen Wellen-Antriebsriemen, der unter Umgehung der Schweißmotor-Riemenscheibe mit zwei ersten Wellen-Riemenscheiben zusammenwirkt. Der Schweißmotor-Antriebsriemen übernimmt also über die Schweißmotor-Riemenscheibe direkt die Antriebskraft vom Schweißmotor und gibt sie an wenigstens eine Übertragungswelle weiter. Der Wellen-Antriebsriemen hingegen übernimmt die Antriebskraft nicht direkt vom Schweißmotor, sondern von einer Übertragungswelle, die zum Beispiel ihrerseits über den Schweißmotor-Antriebsriemen angetrieben sein kann. Diese Antriebskraft wird an wenigstens eine weitere Übertragungswelle weitergegeben. In diesem Zusammenhang sind unterschiedlichste Ausgestaltungen denkbar. Z.B. können zwei dem Schweißmotor am nächsten angeordnete Übertragungswellen über den Schweißmotor-Antriebsriemen angetrieben werden, und von diesen Übertragungswellen kann die Antriebskraft durch jeweils einen Wellen-Antriebsriemen zur jeweils nächsten Übertragungswelle weitergegeben werden, von dort zur übernächsten usw.

Reibkopfseitig kann die Übertragungswelle eine zweite Wellen-Riemenscheibe aufweisen, welche über einen Reibkopf-Antriebsriemen auf eine an den Reibkopf gekoppelte Reibkopf-Riemenscheibe wirkt. Das heißt es erfolgt hier nochmals eine Kraftübertragung durch einen weiteren Antriebsriemen. Diese Kraftübertragung kann insbesondere wenigstens anteilig in vertikaler Richtung erfolgen, das heißt die zweite Wellen-Riemenscheibe und die Reibkopf-Riemenscheibe können vertikal zueinander versetzt sein. Insbesondere kann die zweite Wellen-Riemenscheibe höher angeordnet sein. Dies ermöglicht zum Beispiel die Übertragungswelle oberhalb verschiedener Elemente der Bindeanordnung entlang zu führen, so dass sie mit diesen nicht kollidieren oder ihre Funktion beeinträchtigen kann. Die Reibkopf-Riemenscheibe kann an dem oben genannten Reibkopfträger drehbar gelagert sein. Sie führt eine Drehbewegung aus, die in unterschiedlicher Weise in eine linear oszillierende Bewegung des Reibkopfs übersetzt werden kann, zum Beispiel mittels eines Exzenters.

Bevorzugt ist ein den Reibkopf tragender Reibkopfträger um eine Schweiß-Schwenkachse schwenkbar zwischen einer Schweißposition, in welcher der Reibkopf zu einer Schweißebene abgesenkt ist, in welcher er auf einen Strangabschnitt einwirkt, und einer Passivposition. In der Passivposition ist der Reibkopf von der Schweißebene entfernt, man könnte auch sagen, von dieser abgehoben. Dabei ist bevorzugt vorgesehen, dass ein Riemenspanner auf den Reibkopf-Antriebsriemen einwirkt, wobei eine Riemenscheiben-Drehachse der Reibkopf-Riemenscheibe in der Schweißposition auf einer Seite einer durch eine Übertragungswellen-Drehachse der Übertragungswelle und die Schweiß-Schwenkachse verlaufenden Ebene angeordnet ist und beim Verstellen in die Passivposition zur Ebene hin verlagert wird. Die Funktion des Riemenspanners, welcher durch ein Federelement elastisch vorgespannt sein kann, besteht darin, den Reibkopf-Antriebsriemen unter Spannung zu halten, während der Reibkopfträger verstellt wird. Dabei ist darauf zu achten, dass die entgegengesetzt zueinander laufenden Riementrume zwischen zweiter Wellen-Riemenscheibe und Reibkopf-Riemenscheibe voneinander beabstandet bleiben, auch wenn zum Beispiel der Riemenspanner einen Riementrum zum anderen hin eindrückt. Dies kann mit der oben beschriebenen Konfiguration gewährleistet werden. Es wird eine Ebene betrachtet, die durch die Übertragungswellen-Drehachse der Übertragungswelle sowie die Schweiß-Schwenkachse aufgespannt wird. In der Schweißposition ist die Riemenscheiben-Drehachse der Reibkopf-Riemenscheibe auf einer Seite der genannten Ebene angeordnet. Normalerweise ist dies die Seite, auf der auch der Reibkopf angeordnet ist. Wird der Reibkopfträger in die Passivposition verstellt, bewegt sich die Riemenscheiben-Drehachse auf die Ebene zu und kann sich insbesondere zur anderen Seite durch die Ebene hindurchbewegen.

Bevorzugt ist die Bindeanordnung derart eingerichtet, dass eine Aktivierung des Schweißmotors erfolgt, bevor eine Steuerwelle, über welche eine Auslenkung wenigstens eines Elements der Bindeanordnung während eines Bindevorgangs steuerbar ist, an einen Antriebsmotor gekoppelt wird. Die Steuerwelle ist relativ zum Hauptrahmen der Ballenpresse drehbar und kann zum Beispiel an die Nadelschwinge gekoppelt sein. Während des Bindezyklus wird die Steuerwelle über eine Kupplung an den Antriebsmotor gekoppelt und dreht sich, normalerweise während des gesamten Bindezyklus um 360°. Der genannte Antriebsmotor ist normalerweise ein Antriebsmotor eines Schleppers, dessen Antriebskraft mechanisch zur Ballenpresse übertragen wird. Es könnte prinzipiell auch ein Antriebsmotor der Ballenpresse sein, insbesondere ein Hydraulikmotor. Auch die Drehzahl eines Hydraulikmotors der Ballenpresse ist allerdings normalerweise proportional zur Drehzahl des Antriebsmotors des Schleppers. Somit ist die Drehzahl der Steuerwelle in aller Regel proportional zur Drehzahl des Antriebsmotors des Schleppers. Wenigstens ein Element der Bindeanordnung, zum Beispiel ein Klemmelement oder ein Reibkopfträger, ist über die Steuerwelle steuerbar. Das heißt eine Verstellbewegung des Elements ist an die Drehung der Steuerwelle gebunden. Z.B. kann die Steuerwelle eine Kurvenbahn aufweisen, die mit einem Tasthebel zusammenwirkt, der wiederum mit dem genannten Element verbunden ist. Eine derartige Steuerung ist an sich effektiv, hat aber den Nachteil, dass sich ein derartiges Element erst dann bewegen kann, wenn die Steuerwelle beginnt, sich zu drehen, was wiederum in der Regel mit dem Beginn der Bewegung der Nadelschwinge zusammenfällt. Insgesamt verbleibt daher wenig Zeit, bevor die Nadelschwinge den zu verschweißenden Strangabschnitt in den Bereich der Schweißeinheit geführt hat. Es ist daher vorteilhaft, den Reibkopf bereits vorher anlaufen zu lassen, das heißt der Schweißmotor sollte vor der Ankopplung der Steuerwelle aktiviert werden. Die Ankopplung der Steuerwelle erfolgt normalerweise in Abhängigkeit von der aktuellen Größe des Ballens, welche sensorisch überwacht wird. Entsprechend kann auch die Aktivierung des Schweißmotors in Abhängigkeit von der Größe des Ballens erfolgen. Der Ballen wird schichtweise aufgebaut und die Steuerwelle wird normalerweise eingekoppelt, kurz bevor die letzte Schicht hinzugefügt wird, die zum Erreichen einer Sollgröße erforderlich ist. Der Schweißmotor könnte aktiviert werden, kurz nachdem die vorletzte Schicht hinzugefügt wurde.

Ebenfalls vorteilhaft ist die Bindeanordnung derart eingerichtet, dass eine Deaktivierung des Schweißmotors in Abhängigkeit von einem Drehwinkel der Steuerwelle erfolgt. Das heißt der Schweißmotor wird deaktiviert, wenn die Steuerwelle einen vorgegebenen Drehwinkel erreicht hat. Da die Drehzahl der Steuerwelle proportional zur Drehzahl des Antriebsmotors ist, ergeben sich je nach dessen Drehzahl unterschiedlich lange Zeitintervalle, also eine unterschiedlich lange Schweißdauer. Sofern der Schweißmotor allerdings wie oben beschrieben, als Hydraulikmotor über den Antriebsmotor betrieben wird, ist auch seine Drehzahl proportional zur Drehzahl des Antriebsmotors. Dementsprechend führt der Reibkopf bei höherer Drehzahl eine größere Anzahl an Oszillationen innerhalb eines bestimmten Zeitintervalls aus. Andererseits verkürzt sich das Zeitintervall bei höherer Drehzahl. Diese beiden Effekte kompensieren einander, so dass die Anzahl der Oszillationen gleichbleibt. Entsprechend überträgt der Reibkopf auch drehzahlunabhängig ungefähr die gleiche Energie, so dass stets eine ausreichende Verschweißung resultiert. Alternativ ist es auch denkbar, die Umdrehungen des Schweißmotors zu erfassen und den Schweißmotor nach einer vorgegebenen Anzahl von Umdrehungen zu deaktivieren. Eine weitere Alternative besteht darin, den Schweißmotor zu deaktivieren, wenn ein vorgegebenes Zeitintervall verstrichen ist, seit die Steuerwelle einen bestimmten Drehwinkel erreicht hat. In diesem Fall ist es sinnvoll, die Länge des Zeitintervalls in Abhängigkeit von der Drehzahl des Schweißmotors zu wählen.

Bevorzugt ist jeder Schweißeinheit eine Klemmeinheit zugeordnet, mit zwei in einer Klemmposition zusammenwirkenden Klemmelementen, wobei ein den Reibkopf tragender Reibkopfträger und ein Klemmelement um eine Schweiß-Schwenkachse koaxial schwenkbar gelagert sind, wobei der Reibkopfträger bei einer zur Klemmposition führenden Schließbewegung des Klemmelements über ein zwischengeordnetes erstes Federelement derart mitführbar ist, dass er dem Klemmelement vorauseilt. Verschiedene Phasen des Bindevorgangs können dabei eine Sicherung des Bindemittelstrangs oder eines Strangabschnitts erfordern. Hierzu dient die Klemmeinheit, die dazu ausgebildet ist, wenigstens einen Strangabschnitt eines Bindemittelstrangs einzuklemmen. Die Klemmeinheit weist zwei Klemmelemente auf, die in einer Klemmposition zusammenwirken und den Bindemittelstrang - sofern ein solcher vorhanden ist - einklemmen. Die Klemmeinheit ist verstellbar zwischen der Klemmstellung und einer Freigabestellung. Ein Reibkopfträger, welcher den Reibkopf trägt, und eines der Klemmelemente sind um eine Schweiß-Schwenkachse koaxial schwenkbar gelagert. Dabei kann zum Beispiel eine Welle durch das Klemmelement und den Reibkopfträger hindurchgeführt sein. Klemmelement und Reibkopfträger sind allerdings nicht starr aneinander gekoppelt. Vielmehr ist ein erstes Federelement zwischengeordnet, welches zum Beispiel als Torsionsfeder, Zug- oder Druckfeder ausgebildet sein kann. Durch dieses ist bei einer Schließbewegung des Klemmelements eine elastische Kopplung gegeben, durch die der Reibkopfträger mitgeführt wird. Das heißt beide Elemente drehen sich gleichsinnig um die Schweiß-Schwenkachse. Die Kopplung durch das erste Federelement ist so abgestimmt, dass der Reibkopfträger dem Klemmelement vorauseilend mitgeführt wird. Dementsprechend erreicht er seine Schweißposition, bevor das Klemmelement die Klemmposition erreicht. Danach schwenkt das Klemmelement noch weiter, wobei sich eine Rückstellkraft im ersten Federelement aufbaut, die die Anpresskraft des Reibkopfs bestimmt. Gleichzeitig reduziert sich hierdurch die Klemmkraft der Klemmeinheit.

Eine Ausgestaltung sieht vor, dass das Klemmelement über ein zwischengeordnetes zweites Federelement an ein zwangsgeführtes Antriebselement gekoppelt ist. Das Antriebselement kann direkt oder indirekt an einen Motor gekoppelt sein, und zwar derart, dass es zumindest während der Schließbewegung des Klemmelements zwangsgeführt ist. Das Klemmelement ist hieran gekoppelt, allerdings ist ein zweites Federelement zwischengeordnet, so dass eine elastische Auslenkung zwischen Klemmelement und Antriebselement möglich ist. Das Antriebselement führt das Klemmelement in die Klemmposition, wo dessen Bewegung durch das andere Klemmelement und den zwischengeordneten Strangabschnitt gestoppt wird. Durch eine weitere Bewegung des Antriebselements kann es zu einer Verformung des zweiten Federelements kommen, wodurch verhindert wird, dass die Klemmkraft übermäßig anwächst. Bevorzugt ist das zweite Federelement vorgespannt, so dass es sich erst ab einer bestimmten Klemmkraft verformt. Die durch das zweite Federelement ausgeübte Kraft wird dabei durch die Kraft seitens des ersten Federelements reduziert.

Insbesondere kann das Antriebselement ein Tasthebel sein, der mit einer an der Steuerwelle angeordneten Kurvenbahn zusammenwirkt und der über eine Koppelstange mit einem drehfest mit dem Klemmelement verbundenen Kurbelarm zusammenwirkt, wobei das zweite Federelement zwischen dem Tasthebel und dem Kurbelarm zwischengeordnet ist. Der Tasthebel kann am Hauptrahmen der Ballenpresse oder an einem Rahmen der Bindevorrichtung schwenkbar gelagert sein. Er ist normalerweise derart vorgespannt, dass er wenigstens zeitweise Kontakt mit der Kurvenbahn hält und deren Verlauf folgt. Die Kurvenbahn ist normalerweise drehfest mit der Steuerwelle verbunden. Der Tasthebel wirkt direkt oder indirekt auf die Koppelstange, die ihrerseits direkt oder indirekt auf den Kurbelarm wirkt. Der Kurbelarm ist wiederum drehfest mit dem Klemmelement verbunden, bezogen auf die gemeinsame Drehachse von Klemmelement und Reibkopfträger. Die Funktion der Koppelstange liegt zum einen in einer Kraftübertragung über einen gegebenen Abstand, sowie zum anderen darin, zwischen den Schwenkbewegungen des Tasthebels einerseits und des Kurbelarms andererseits zu vermitteln. Das zweite Federelement ist zwischen Tasthebel und Kurbelarm zwischengeordnet, wobei unterschiedliche Möglichkeiten gegeben sind.

Gemäß einer Ausgestaltung ist das zweite Federelement zwischen einem mit dem Kurbelarm verbundenen ersten Stangenteil der Koppelstange und einem demgegenüber auslenkbaren, mit dem Tasthebel verbundenen zweiten Stangenteil zwischengeordnet. Das heißt die Koppelstange ist nicht als in sich starres Element ausgebildet, sondern weist zwei gegeneinander auslenkbare Stangenteile auf. Zwischen diesen ist das zweite Federelement zwischengeordnet, in aller Regel vorgespannt. Dabei ist die Vorspannung bevorzugt einstellbar, und zwar unter Beibehaltung einer Länge der Koppelstange. Das heißt eine Veränderung der Vorspannung verändert nicht die Länge der Koppelstange. Um dies zu realisieren, kann ein Stangenteil wiederum zwei Teilelemente aufweisen, die gegeneinander verstellbar sind, wobei das eine Teilelement einen Anschlag für den anderen Stangenteil aufweist und mit dem Kurbelarm (oder aber dem Tasthebel) verbunden ist, und das zweite Federelement zwischen dem anderen Teilelement und dem anderen Stangenteil vorgespannt ist, welcher mit dem Tasthebel (oder aber dem Kurbelarm) verbunden ist.

Bevorzugt ist die Schweiß-Schwenkachse unterhalb der Schweißebene angeordnet. Normalerweise verläuft die Schweißebene wenigstens annähernd waagerecht, wobei unter Umständen eine Neigung von zum Beispiel maximal 10° gegenüber der Horizontalen gegeben sein kann. Allgemein bezeichnet "unterhalb" in diesem Zusammenhang eine Position auf der dem Reibkopf gegenüberliegenden Seite der Schweißebene. Durch die geschilderte Anordnung führt eine Schwenkbewegung des Reibkopfträgers, die den Reibkopf vom Schweißbereich abhebt, unmittelbar zu einer anteilig horizontalen Bewegung, die den Reibkopf sowie den Reibkopfträger seitwärts aus dem Bereich des Bindemittelstrangs herausbewegt. Der entsprechende Bereich kann somit durch Schwenkbewegung um einen vergleichsweise kleinen Winkel (zum Beispiel unter 80°) freigegeben werden. Dies verkürzt die Zeit zum Öffnen ebenso wie die Zeit zum Schließen der Schweißeinheit.

Durch die Erfindung wird ebenfalls eine Ballenpresse zur Verfügung gestellt, welche dazu eingerichtet ist, einen Erntegutballen in einem Presskanal zu formen und mit wenigstens einem strangförmigen Bindemittel zu umhüllen, wobei die Ballenpresse eine oben beschriebene erfindungsgemäße Bindeanordnung aufweist. Vorteilhafte Ausgestaltungen der erfindungsgemäßen Ballenpresse entsprechen denen der erfindungsgemäßen Bindevorrichtung.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Darstellung eines Teils einer erfindungsgemäßen Ballenpresse;
- Fig. 2A - 2C: stark schematisierte Darstellungen von Teilen der Ballenpresse sowie eines Bindemittelstrangs während verschiedener Zeitpunkte eines Bindezyklus;
- Fig. 3: eine perspektivische Darstellung eines Teils der Ballenpresse aus Fig.1 mit einer erfindungsgemäßen Bindeanordnung;
- Fig. 4 und 5: perspektivische Darstellungen einer Bindevorrichtung der Ballenpresse aus Fig. 1;
- Fig. 6: eine perspektivische Darstellung eines Teils der Bindevorrichtung aus Fig. 4;
- Fig. 7: eine teilweise Schnittdarstellung einer Koppelstange der Bindevorrichtung aus Fig. 4; sowie
- Fig. 8A-8B: Rückansichten der Bindevorrichtung aus Fig.4 während verschiedener Zeitpunkte des Bindezyklus.

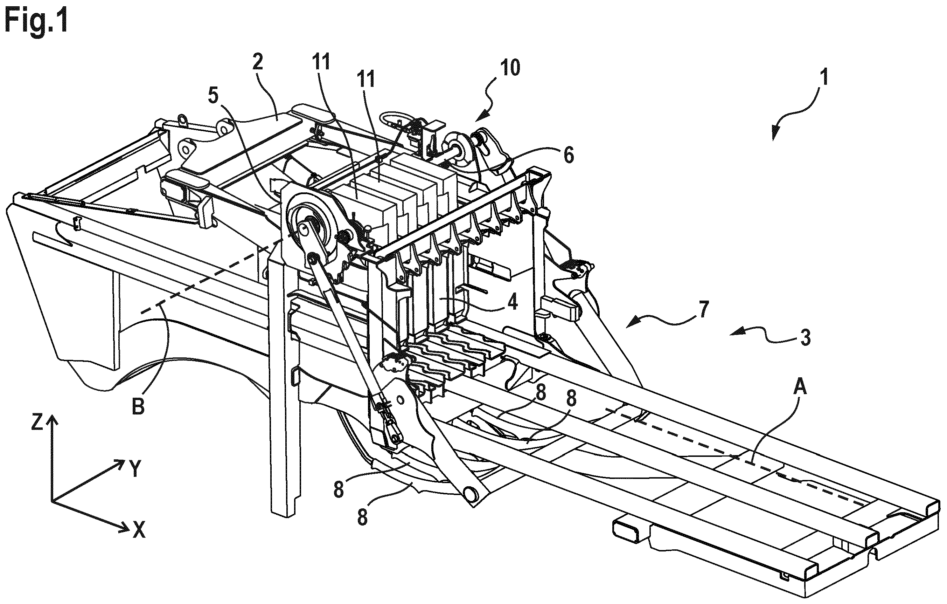

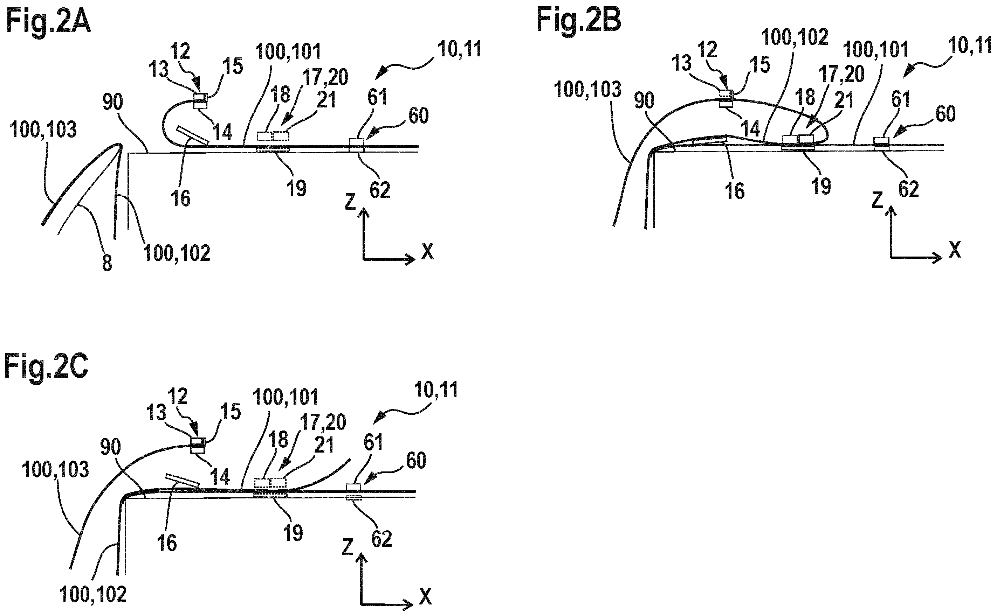

Fig. 1 zeigt eine perspektivische Darstellung von Teilen einer erfindungsgemäßen Ballenpresse 1, genauer gesagt einer Quaderballenpresse. Hier und in den weiteren Figuren sind die entgegen der Fahrtrichtung nach hinten weisende Längsachse X, die Querachse Y und die Hochachse Z dargestellt. Verschiedene Komponenten, die zum Verständnis der Erfindung nicht relevant sind, wurden weggelassen, zum Beispiel ein Fahrwerk sowie eine Deichsel, mittels welcher die Ballenpresse 1 an ein Zugfahrzeug koppelbar ist. Die Erfindung ist ausdrücklich nicht auf gezogene oder getragene Ballenpressen beschränkt, sondern bezieht sich auch auf selbstfahrende Ballenpressen. Die Ballenpresse 1 weist einen Hauptrahmen 2 auf. Innerhalb des Hauptrahmens 2 ist ein Presskanal 3 definiert, der sich entlang einer Kanallängsachse A erstreckt. Die seitliche sowie obere Verkleidung des Presskanals 3 ist in der Figur teilweise weggelassen. Innerhalb des Presskanals 3 wird ein (in Fig. 2A bis 2C schematisch dargestellter) Quaderballen 90 sukzessive aus Portionen von Erntegut aufgebaut, welche in einer hier nicht sichtbaren Sammelkammer vorverdichtet wurden. Dabei wird das Erntegut im Presskanal 3 durch einen oszillierenden Presskolben 4 verdichtet. Wenn der Quaderballen 90 seine vorbestimmte Größe erreicht hat, wird er mittels eines Bindemittels, genauer gesagt, eines thermoplastischen Bandes, zusammengebunden. Dabei werden mehrere Schleifen aus Bindemittel, die quer zur Kanallängsachse A voneinander beabstandet sind, um den Quaderballen 90 gelegt. Insgesamt können hier sechs Schleifen hergestellt werden. Zur Bildung der jeweiligen Schleife wird ein erster Strangabschnitt 101 eines Bindemittelstrangs 100, welcher an einem Ende des Ballens 90 an dessen Oberseite festgehalten wird, mit einem zweiten Strangabschnitt 102 verbunden, der zu diesem Zweck von unten durch den Presskanal 3 und weiter zu dessen Oberseite geführt wird. Dies geschieht mittels sechs Bindenadeln 8, die Teil einer Nadelschwinge 7 sind. Die Nadelschwinge 7 ist in hier nicht näher erläuterter Weise mit einer Steuerwelle 6 verbunden und durch diese antreibbar. Die Steuerwelle 6 kann über ein Kupplungsgetriebe 5 mit einem (nicht dargestellten) motorischen Antrieb verbunden werden, so dass sie sich um eine Steuerwellenachse B dreht und die Nadelschwinge 7 für einen Bindezyklus angetrieben wird.

Die Ballenpresse 1 weist Bindevorrichtungen 11 auf, die in Fig.1 stark schematisiert quaderförmig dargestellt sind. Jede der Bindevorrichtungen 11 ist jeweils zum Herstellen einer der quer zur Kanallängsachse A voneinander beabstandeten Schleifen aus Bindemittel vorgesehen. Jede Bindevorrichtung 11 weist eine vordere Klemmeinheit 12 auf, der ein Trennelement 15 zugeordnet ist, eine mittlere Klemmeinheit 17, der eine Schweißeinheit 20 zugeordnet ist, sowie eine hintere Klemmeinheit 60. Außerdem weist die Bindevorrichtung 11 einen Niederhalter 16 auf.

Die Funktion der einzelnen Elemente wird nachfolgend anhand von Fig.2A bis 2C erläutert.

Fig.2A repräsentiert einen Zustand kurz vor der Fertigstellung des Quaderballens 90, während durch den (hier nicht dargestellten) Presskolben 4 eine letzte Schicht Erntegut hinzugefügt wird. Der erste Strangabschnitt 101, welcher einen Endabschnitt des Bindemittelstrangs 100 bildet, liegt auf der Oberseite des Quaderballens 90 auf und ist endseitig zwischen einem ersten vorderen Klemmelement 13 und einem zweiten vorderen Klemmelement 14 der vorderen Klemmeinheit 12 festgehalten. Das Trennelement 15 ist starr an das erste vordere Klemmelement 13 gekoppelt. Der Niederhalter 16 ist inaktiv und hat gegebenenfalls nur geringfügigen oder keinen Kontakt mit dem Strangabschnitt 101. Ein erstes mittleres Klemmelement 18 und ein zweites mittleres Klemmelement 19 der mittleren Klemmeinheit 17, ebenso wie ein Reibkopfträger 21 der Schweißeinheit 20, sind aus der Zeichenebene herausgeschwenkt. Derart außerhalb der Zeichenebene positionierte Elemente sind hier und in Fig.2B und 2C jeweils durch gestrichelte Linien dargestellt. Durch einen hier nicht dargestellten Sensor wurde festgestellt, dass dem Quaderballen 90 nur noch eine Schicht hinzugefügt werden muss, damit er eine vorgegeben Sollgröße erreicht. Daraufhin wurde ein Schweißmotor 25 gestartet, der eine Reibkopf 22 der Schweißeinheit 20 antreibt. Dies geschieht noch bevor die Steuerwelle 6 über das Kupplungsgetriebe 5 mit dem motorischen Antrieb verbunden wird. Ebenfalls vor dem Ankoppeln der Steuerwelle 6 wurde bereits die hintere Klemmeinheit 60 geschlossen, so dass der erste Strangabschnitt 101 zwischen einem ersten hinteren Klemmelement 61 und einem zweiten hinteren Klemmelement 62 eingeschlossen ist. Die Bindenadel 8 führt einen zweiten Strangabschnitt 102 desselben Bindemittelstrangs 100 sowie einen hiermit zusammenhängenden dritten Strangabschnitt 103 durch den Presskanal 3 hindurch nach oben.

Fig.2B repräsentiert einen Zustand, in dem die Bindenadel 8 den zweiten Strangabschnitt 102 auf dem ersten Strangabschnitt 101 abgelegt hat. Die vorderen Klemmelemente 13, 14 und das Trennelement 15 wurden aus der Zeichenebene geschwenkt, um Platz für die Bindenadel 8 zu machen. Da der erste Strangabschnitt 101 mittels der hinteren Klemmeinheit 70 festgeklemmt ist, wird verhindert, dass er sich verschiebt oder völlig verloren geht. Der Niederhalter 16 wurde so verstellt, dass er den ersten Strangabschnitt 101 von oben beaufschlagt und verhindert, dass dieser in die Bewegungsbahn der Bindenadel 8 hineinragt. Das erste mittlere Klemmelement 18 und der Reibkopfträger 21 werden in die Zeichenebene geschwenkt und schließen den ersten Strangabschnitt 101 zwischen sich und dem zweiten mittleren Klemmelement 19 ein. Dabei wird das zweite vordere Klemmelement 14 wieder in die Zeichenebene geschwenkt. Durch Aktivierung eines am Reibkopfträger 21 angeordneten Reibkopfes 22 werden der erste Strangabschnitt 101 und der zweite Strangabschnitt 102 reibverschweißt.

Die hintere Klemmeinheit 60 kann nun gelöst werden, wobei das erste hintere Klemmelement 61 in diesem Fall stationär ist und somit in der Zeichenebene verbleibt. Auch der Niederhalter 16 wird vom ersten Strangabschnitt 101 gelöst, wobei er zwischen diesem und dem zweiten Strangabschnitt 102 herausbewegt wird. Die vordere Klemmeinheit 12 erfasst den mit dem zweiten Strangabschnitt 102 zusammenhängenden dritten Strangabschnitt 103 und das Trennelement 15 trennt den zweiten Strangabschnitt 102 hiervon ab. Dieser Zustand ist in Fig.2C dargestellt. Nachdem die Strangabschnitte 101, 102 verschweißt wurden, kann die mittlere Klemmeinheit 17 einschließlich des Reibkopfträgers 21 gelöst und aus der Zeichenebene herausbewegt werden. Der Schweißmotor 25 kann deaktiviert werden, was hier in Abhängigkeit von einem Drehwinkel der Steuerwelle 20 erfolgt. Der nunmehr vollständig umreifte Quaderballen kann nach hinten gefördert und ausgeworfen werden. Der von der vorderen Klemmeinheit 12 erfasste dritte Strangabschnitt 103 übernimmt beim nächsten Bindezyklus die Rolle des ersten Strangabschnitts 101.

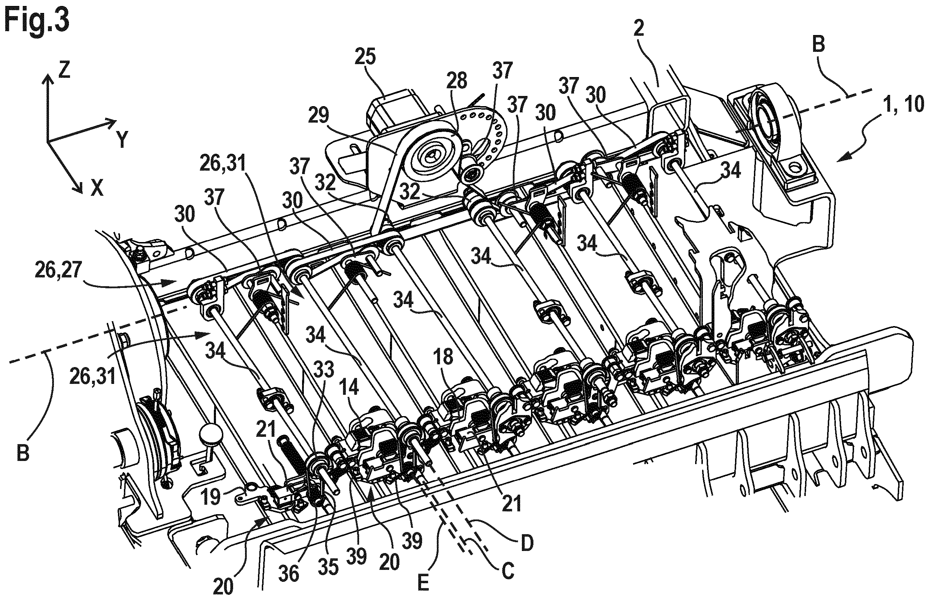

Fig.3 illustriert den Antrieb der Reibköpfe 22 der einzelnen Schweißeinheiten 20. Dabei sind die Steuerwelle 6 sowie wesentliche Teile der einzelnen Bindevorrichtungen 11 weggelassen, um die darunter liegenden Elemente sichtbar zu machen. Erkennbar ist ein als Hydraulikmotor ausgebildeter Schweißmotor 25, der am Hauptrahmen 2 befestigt ist und bezüglich der Längsachse X noch vor der Steuerwelle 6 angeordnet ist. In diesem Bereich ist ausreichend Bauraum zur Unterbringung des Schweißmotors 25 vorhanden. Durch ein Getriebe 26 wird die Antriebskraft des Schweißmotors 25 zu den einzelnen Reibköpfen 22 übertragen. Der Schweißmotor 25 weist eine Schweißmotor-Riemenscheibe 28 auf, die einen Schweißmotor-Antriebsriemen 29 antreibt. Dieser wiederum greift mit zwei ersten Wellen-Riemenscheiben 32 ein, die an zwei Übertragungswellen 34 befestigt sind. Insgesamt sind sechs Übertragungswellen 34 drehbar gegenüber dem Hauptrahmen 2 gelagert. Die jeweilige Übertragungswelle 34 ist um eine Übertragungswellen-Drehachse drehbar gelagert und verläuft in diesem Fall nahezu parallel zur Längsachse X, ist allerdings um 5° in Richtung der Hochachse Z geneigt. Jede der beiden über den Schweißmotor-Antriebsriemen 29 angetriebenen Übertragungswellen 34 ist ihrerseits über einen Wellen-Antriebsriemen 30 mit einer weiteren Übertragungswelle 34 verbunden, und diese wiederum über einen weiteren Wellen-Antriebsriemen 30 mit einer weiteren Übertragungswelle 34. Somit wird das Antriebsmoment des Schweißmotors 25 mittels der Wellen-Antriebsriemen 30 von einer Übertragungswelle 34 zur nächsten weitergegeben. Soweit zwei Antriebsriemen 29, 30 an einer Übertragungswelle 34 angreifen, weist diese vorliegend zwei erste Wellen-Riemenscheiben 32 auf, alternativ könnten aber auch beide Antriebsriemen 29, 30 an einer entsprechend breit ausgelegten einzelnen ersten Wellen-Riemenscheibe 32 angreifen. Der Schweißmotor-Antriebsriemen 29, die Wellen-Antriebsriemen 30 sowie die Wellen-Riemenscheiben 32 bilden Teile einer Verteileranordnung 27, die wiederum Teil eines Getriebes 26 ist. Während die Verteileranordnung 27 die Antriebskraft im Wesentlichen aufteilt, dienen eine Mehrzahl von insgesamt sechs Übertragungswegen 31 dazu, die Teile der Antriebskraft weiter zu den Reibköpfen 22 zu übertragen. Dabei bildet jede Übertragungswelle 34 ein wesentliches Element eines Übertragungswegs 31. Bezüglich der Längsachse X nahe ihrem hinteren Ende weist jede Übertragungswelle 34 eine zweite Wellen-Riemenscheibe auf, die über einen Reibkopf-Antriebsriemen 35 mit einer Reibkopf-Riemenscheibe 36 zusammenwirkt. Die Reibkopf-Riemenscheibe 36 treibt wiederum in an sich bekannter und hier nicht im Detail dargestellter Weise einen Exzenter an, der eine oszillierende Bewegung des Reibkopfs 22 erzeugt. Der Schweißmotor 25 ist als Hydraulikmotor über den gleichen motorischen Antrieb betreibbar wie die Steuerwelle 6, nämlich über den Antriebsmotor eines nicht dargestellten Schleppers, der entweder ein Hydrauliksystem des Schleppers antreibt, an welches der Hydraulikmotor angeschlossen ist, oder eine (ebenfalls nicht dargestellte) Pumpe der Ballenpresse 1 mechanisch antreibt. Die Drehzahl des Schweißmotors 25 ist daher proportional zur Winkelgeschwindigkeit der Steuerwelle 6. Daher führt eine Deaktivierung des Schweißmotors 25 bei einem bestimmten Drehwinkel der Steuerwelle 6 immer zu einer (wenigstens annähernd) gleichen Anzahl von Oszillationen der Reibköpfe 22 und somit zu einem annähernd gleichen Energieeintrag in den Bindemittelstrang 100. Alternativ können auch die Umdrehungen des Schweißmotors 25 erfasst werden, wobei eine Deaktivierung nach einer bestimmten Anzahl von Umdrehungen erfolgt. Schließlich wäre es möglich, den Schweißmotor 25 nach Verstreichen eines vorgegebenen Zeitintervalls zu deaktivieren.

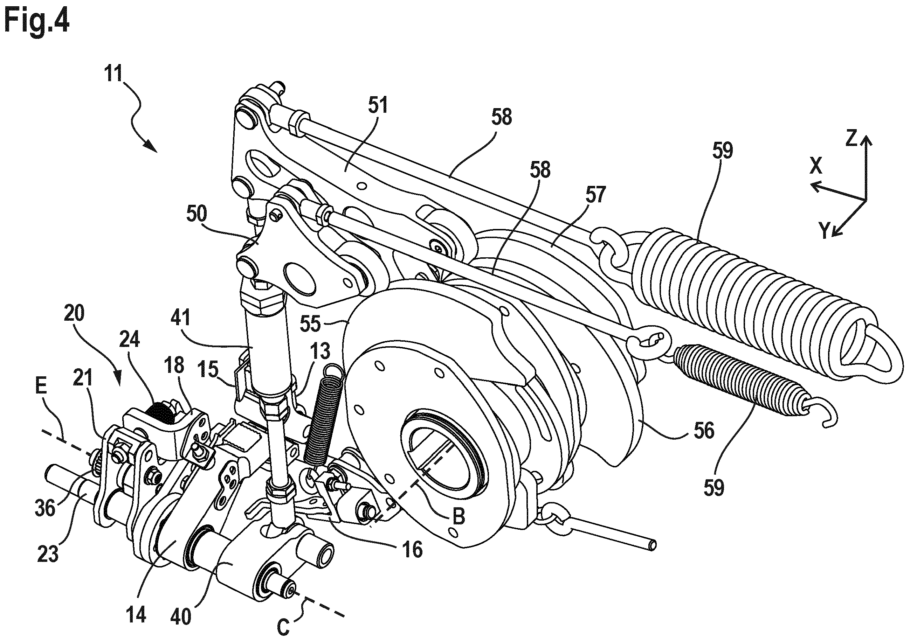

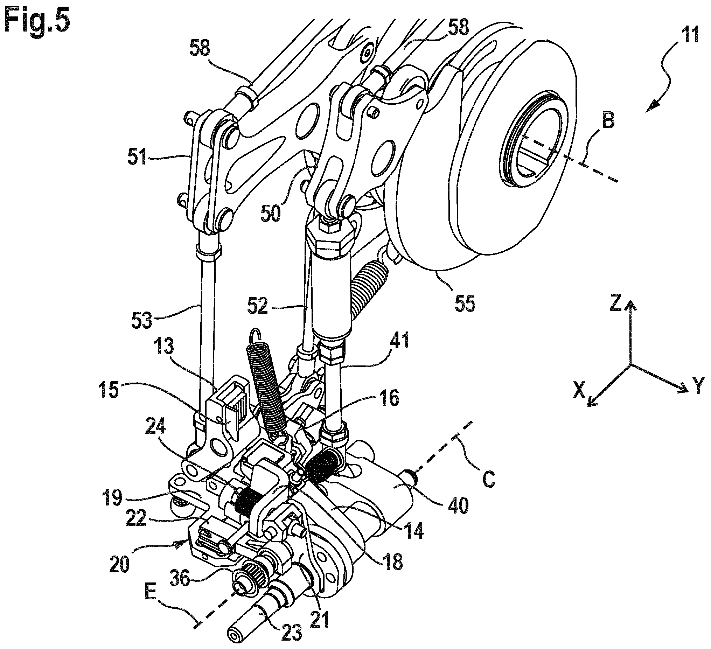

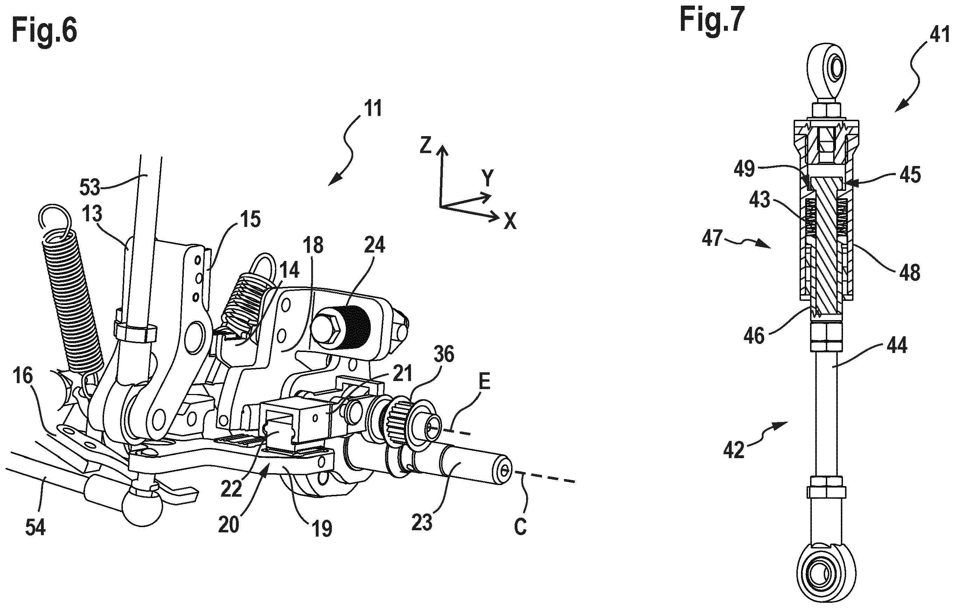

Fig. 4 und 5 zeigen jeweils wesentliche Teile einer Bindevorrichtung 11, während Fig. 6 wiederum eine Detailansicht derselben zeigt. Einige der dargestellten Elemente sind an einem in sich starren Binderahmen angeordnet, welcher hier nicht dargestellt ist. Eine Mehrzahl von Kurvenbahnen 55-57 ist drehfest mit der Steuerwelle 6 verbunden. In diesem Fall sind für jede Bindevorrichtung 11 drei Kurvenbahnen vorgesehen, die mit jeweils einem Tasthebel 50, 51 zusammenwirken, der schwenkbar am Binderahmen angeordnet ist. Wie in Fig.4 dargestellt ist, wirkt eine erste Kurvenbahn 55 mit einem ersten Tasthebel 50 zusammen, der über eine erste Koppelstange 41 in nachfolgend noch erläuterter Weise auf das erste mittlere Klemmelement 18 wirkt. Er ist über ein Verbindungselement 58 (in diesem Fall eine Stange) an ein Federelement 59 gekoppelt und über Letzteres in Richtung auf die erste Kurvenbahn 55 vorgespannt. Eine zweite Kurvenbahn 56 wirkt mit einem zweiten Tasthebel 51 zusammen, der über eine zweite Koppelstange 52 mit dem Niederhalter 16 und über eine dritte Koppelstange 53 mit dem ersten vorderen Klemmelement 13 zusammenwirkt. Der zweite Tasthebel 51 ist über ein Federelement 59 in Richtung auf die zweite Kurvenbahn 56 vorgespannt. Eine dritte Kurvenbahn 57 wirkt mit einem (in den Figuren verdeckten) dritten Tasthebel zusammen, und über eine vierte Koppelstange 54 mit dem zweiten mittleren Klemmelement 19 zusammenwirkt, um dieses um eine Schwenkachse (ohne Bezugszeichen) zu schwenken, die hier gegenüber der Hochachse Z um 5° entgegen der Längsachse X geneigt ist.

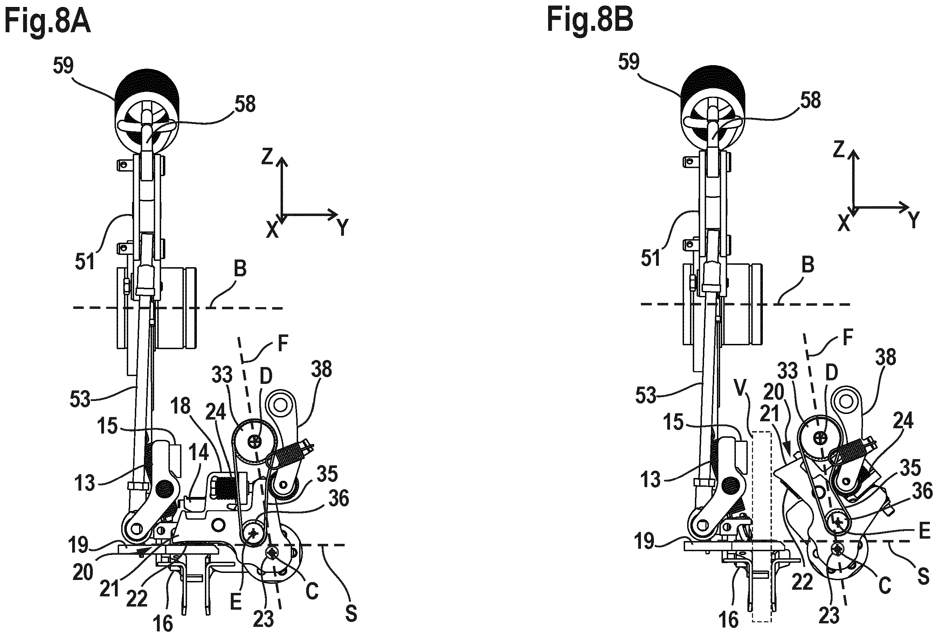

Der Reibkopfträger 21, das erste mittlere Klemmelement 18 sowie das zweite vordere Klemmelement 14 sind koaxial um eine Schweiß-Schwenkachse C schwenkbar, allerdings nicht drehfest miteinander verbunden. Das erste mittlere Klemmelement 18 ist über ein Federelement 24 an den Reibkopfträger 21 gekoppelt. Das Federelement 24 überträgt ein Drehmoment, so dass bei einer Schwenkbewegung des ersten mittleren Klemmelements 18 der Reibkopfträger 21 voreilend mitgeführt wird. Das heißt wenn das erste mittlere Klemmelement 18 in eine Klemmposition zum zweiten mittleren Klemmelement 19 hin geschwenkt wird, eilt der Reibkopfträger 21 (beispielsweise um 3°) voraus, so dass der mit ihm verbundene Reibkopf 22 vor dem ersten mittleren Klemmelement 18 auf dem zweiten mittleren Klemmelement 19 zur Anlage kommt, beziehungsweise auf den Strangabschnitten 101, 102, die ihrerseits auf dem zweiten mittleren Klemmelement 19 aufliegen. Man kann auch sagen, dass der Reibkopf 22 eine in Fig. 8A und 8B eingezeichnete Schweißebene S erreicht, bevor die mittlere Klemmeinheit 17 eine Klemmposition erreicht. Dieser Sachverhalt geht aus Fig. 6 hervor, in welcher der Reibkopf 22 bereits in Kontakt mit dem zweiten mittleren Klemmelement 19 ist, während zwischen dem ersten mittleren Klemmelement 18 und dem zweiten mittleren Klemmelement 19 noch ein Abstand besteht. Bis das erste mittlere Klemmelement 18 die Klemmposition erreicht hat, wird das Federelement 24 nun zunehmend komprimiert, wodurch eine Anpresskraft erzeugt wird, die nur von der geometrischen Anordnung des ersten mittleren Klemmelements 18 und des Reibkopfträgers 21 mit dem daran angeordneten Reibkopf 22 abhängt, sowie von der Federkonstanten des Federelements 24. Diese Anpresskraft ist somit sehr zuverlässig reproduzierbar und hängt zum Beispiel nicht von der Klemmkraft der mittleren Klemmeinheit 17 ab (welche zwischen deren Klemmelementen 18, 19 wirkt).

Das erste mittlere Klemmelement 18 ist seinerseits drehfest an einen Kurbelarm 40 gekoppelt, der über eine erste Koppelstange 41 an einen ersten Tasthebel 50 gekoppelt ist. Dieser erste Tasthebel 50 wirkt mit einer ersten Kurvenbahn 55 zusammen, die drehfest auf der Steuerwelle 6 aufsitzt. Wird der Tasthebel 50 durch die Kurvenbahn 55 ausgelenkt, drückt er über die erste Koppelstange 41 den Kurbelarm 40 herab, wodurch das erste mittlere Klemmelement 18 in die Klemmposition überführt wird. Die dabei ausgeübte Klemmkraft wird wiederum durch die Vorspannung eines in die erste Koppelstange 41 integrierten Federelements 43 kontrolliert. Wie aus der teilweisen Schnittdarstellung in Fig. 7 hervorgeht, weist die erste Koppelstange 41 einen ersten Stangenteil 42 sowie einen hiermit verbundenen zweiten Stangenteil 47 auf. Dabei ist ein Kolbenteil 44 des ersten Stangenteils 42 teilweise in einem Zylinderteil 48 des zweiten Stangenteils 47 aufgenommen. Eine Stellhülse 46 umgibt das Kolbenteil 44 teilweise und ist wiederum teilweise innerhalb des Zylinderteils 48 angeordnet. Dabei ist das genannte Federelement 43 (welches hierdurch ein Tellerfederpaket gebildet ist) zwischen der Stellhülse 46 und einem Innenflansch 49 des Zylinderteils 48 vorgespannt. Auf einer dem Federelement 43 gegenüberliegenden Seite liegt ein Kopfabschnitt 45 des Kolbenteils 44 formschlüssig am Innenflansch 49 an. Die Vorspannung des Federelements 43 kann angepasst werden, indem die Position der Stellhülse 46 gegenüber dem Kolbenelement 44 verändert wird. Die Gesamtlänge der Koppelstange 41 bleibt beim Verstellen der Stellhülse unverändert und ändert sich nur durch eine Auslenkung der beiden Stangenteile 41, 47 gegeneinander. Bei der Einstellung der Vorspannung kann berücksichtigt werden, dass die Klemmkraft des ersten mittleren Klemmelements 18 jeweils um die Anpresskraft des Reibkopfs 22 reduziert ist, womit eine entsprechend höhere Vorspannung eingestellt werden muss, um eine bestimmte Klemmkraft zu realisieren.

Fig. 8A und 8B zeigen Rückansichten der Bindevorrichtung 11, wobei die Betrachtungsebene vor der hinteren Klemmeinheit 60 liegt, so dass diese nicht zu sehen ist. Die Blickrichtung ist parallel zur Schweiß-Schwenkachse C gewählt, welche ihrerseits gegenüber der Längsachse X um 5° zur Hochachse Z hin geneigt ist. Fig.8A zeigt einen Zustand, der Fig.2B entspricht. Die vordere Klemmeinheit 12 ist geöffnet, während die mittlere Klemmeinheit 17 geschlossen ist. Der Reibkopfträger 21 ist in einer Schweißposition, in welcher der Reibkopf 22 zur Schweißebene S abgesenkt ist. Fig. 8B zeigt hingegen einen Zustand, in dem sowohl die vordere Klemmeinheit 12 als auch die mittlere Klemmeinheit 17 geöffnet sind, wobei auch das zweite vordere Klemmelement 14 in die Freigabeposition geschwenkt ist. Der Reibkopfträger 21 ist in einer Passivposition, in welcher der Reibkopf von der Schweißebene S abgehoben ist.

Der Übergang zwischen der Schweißposition und der Passivposition erfolgt durch eine Schwenkbewegung um einen Winkel von ca. 42°. Der vergleichsweise geringe Schwenkwinkel wird dadurch ermöglicht, dass die Schweiß-Schwenkachse C unterhalb der Schweißebene S angeordnet ist. Dadurch ist die Aufwärtsbewegung des Reibkopfes 22, die diesen von der Schweißebene S abhebt, mit einer erheblichen horizontalen Bewegungskomponente verbunden. Somit verlassen Reibkopfträger 21 und Reibkopf 22 bereits nach einen geringen Schwenkwinkel einen Strangverlaufsbereich V, in welchem der Bindemittelstrang 100, insbesondere dessen zweiter Strangabschnitt 102 wenigstens zeitweise verläuft. Dieser Strangverlaufsbereich V muss insbesondere beim Zuführen des zweiten Strangabschnitts 102 frei bleiben, um eine Kollision mit dem zweiten Strangabschnitt 102 oder mit der Bindenadel 8 zu vermeiden. Ebenso können Reibkopfträger 21 und Reibkopf 22 von der Passivposition außerhalb des Strangverlaufsbereichs V mit einer vergleichsweise geringen Schwenkbewegung wieder in die Schweißposition überführt werden.

Bei der Schwenkbewegung wird die Riemenspannung im Reibkopf-Antriebsriemen 35 mit einem Riemenspanner 38 aufrechterhalten, der auf den Reibkopf-Antriebsriemen 35 einwirkt. Dabei ist eine Riemenscheiben-Drehachse E der Reibkopf-Riemenscheibe 36 in der Schweißposition auf einer Seite einer durch die Übertragungswellen-Drehachse D und die Schweiß-Schwenkachse C verlaufenden Ebene F angeordnet. Beim Verstellen in die Passivposition wird die Riemenscheiben-Drehachse E zur Ebene F hin verlagert und läuft durch diese hindurch zur anderen Seite. Durch die entsprechende Anordnung der Riemenscheiben-Drehachse E gegenüber der Ebene F wird erreicht, dass der Reibkopf-Antriebsriemen 35 ständig gespannt bleibt, ohne dass sich die gegenläufigen Riementrume berühren.

## Patentansprüche

1. Bindeanordnung (10) für eine Ballenpresse (1), welche dazu eingerichtet ist, einen Erntegutballen (90) in einem Presskanal (3) zu formen und mit wenigstens einem strangförmigen Bindemittel zu umhüllen, wobei die Bindeanordnung (10) eine Mehrzahl von bezüglich einer Querachse (Y) zueinander versetzten Schweißeinheiten (20) aufweist, von denen jede einen oszillierend antreibbaren Reibkopf (22) zum Reibverschweißen zweier Strangabschnitte (101-103) wenigstens eines Bindemittelstrangs (100) aufweist, wobei die Bindeanordnung (10) wenigstens einen Schweißmotor (25) zum Antrieb der Reibköpfe (22) aufweist, **dadurch gekennzeichnet, dass**
die Bindeanordnung (10) ein Getriebe (26) zur gleichzeitigen Antriebsverbindung eines Schweißmotors (25) mit einer Mehrzahl von Reibköpfen (22) aufweist.

2. Bindeanordnung nach Anspruch 1, **dadurch gekennzeichnet, dass** der Schweißmotor (25) als Hydraulikmotor ausgebildet ist.

3. Bindeanordnung nach einem der vorherigen Ansprüche, **dadurch gekennzeichnet, dass** das Getriebe (26) eine Verteileranordnung (27) aufweist, die den Schweißmotor (25) mit einer Mehrzahl von Übertragungswegen (31) verbindet, von denen jeder an einen Reibkopf (22) gekoppelt ist.

4. Bindeanordnung nach einem der vorherigen Ansprüche, **dadurch gekennzeichnet, dass** die Reibköpfe (22) bezüglich einer Längsachse (X) vom Schweißmotor (25) beabstandet sind, wobei jeder Übertragungsweg (31) eine sich wenigstens anteilig entlang der Längsachse (X) erstreckende Übertragungswelle (34) aufweist.

5. Bindeanordnung nach einem der vorherigen Ansprüche, **dadurch gekennzeichnet, dass** die Übertragungswelle (34) schweißmotorseitig eine erste Wellen-Riemenscheibe (32) aufweist, welche mit einem Antriebsriemen (29, 30) der Verteileranordnung (27) zusammenwirkt.

6. Bindeanordnung nach einem der vorherigen Ansprüche, **dadurch gekennzeichnet, dass** die Verteileranordnung (27) einen Schweißmotor-Antriebsriemen (29) aufweist, der mit einer direkt an den Schweißmotor (25) gekoppelten Schweißmotor-Riemenscheibe (28) und wenigstens einer ersten Wellen-Riemenscheibe (32) zusammenwirkt, sowie wenigstens einen Wellen-Antriebsriemen (30), der unter Umgehung der Schweißmotor-Riemenscheibe (28) mit zwei ersten Wellen-Riemenscheiben (32) zusammenwirkt.

7. Bindeanordnung nach einem der vorherigen Ansprüche, **dadurch gekennzeichnet, dass** die Übertragungswelle (34) reibkopfseitig eine zweite Wellen-Riemenscheibe (33) aufweist, welche über einen Reibkopf-Antriebsriemen (35) auf eine an den Reibkopf (22) gekoppelte Reibkopf-Riemenscheibe (36) wirkt.

8. Bindeanordnung nach einem der vorherigen Ansprüche, **dadurch gekennzeichnet, dass** ein den Reibkopf (22) tragender Reibkopfträger (21) um eine Schweiß-Schwenkachse (C) schwenkbar ist zwischen einer Schweißposition, in welcher der Reibkopf (22) zu einer Schweißebene (S) abgesenkt ist, in welcher er auf wenigstens einen Strangabschnitt (101-103) einwirkt, und einer Passivposition, wobei ein Riemenspanner (38) auf den Reibkopf-Antriebsriemen (35) einwirkt, wobei eine Riemenscheiben-Drehachse (E) der Reibkopf-Riemenscheibe (36) in der Schweißposition auf einer Seite einer durch eine Übertragungswellen-Drehachse (D) der Übertragungswelle (34) und die Schweiß-Schwenkachse (C) verlaufenden Ebene (F) angeordnet ist und beim Verstellen in die Passivposition zur Ebene (F) hin verlagert wird.

9. Bindeanordnung nach einem der vorherigen Ansprüche, **dadurch gekennzeichnet, dass** diese derart eingerichtet ist, dass eine Aktivierung des Schweißmotors (25) erfolgt, bevor eine Steuerwelle (6), über welche eine Auslenkung wenigstens eines Elements der Bindeanordnung (10) während eines Bindevorgangs steuerbar ist, an einen Antriebsmotor gekoppelt wird und/oder dass eine Deaktivierung des Schweißmotors (25) in Abhängigkeit von einem Drehwinkel der Steuerwelle (6) erfolgt.

10. Bindeanordnung nach dem Oberbegriff von Anspruch 1 oder nach einem der vorherigen Ansprüche,
**dadurch gekennzeichnet, dass**
jeder Schweißeinheit (20) eine Klemmeinheit (17) zugeordnet ist, mit zwei in einer Klemmposition zusammenwirkenden Klemmelementen (18, 19), wobei ein den Reibkopf (22) tragender Reibkopfträger (21) und ein Klemmelement (18, 19) um eine Schweiß-Schwenkachse (C) koaxial schwenkbar gelagert sind, wobei der Reibkopfträger (21) bei einer zur Klemmposition führenden Schließbewegung des Klemmelements (18, 19) über ein zwischengeordnetes erstes Federelement (24) derart mitführbar ist, dass er dem Klemmelement (18, 19) vorauseilt.

11. Bindeanordnung nach einem der vorherigen Ansprüche, **dadurch gekennzeichnet, dass** das Klemmelement (18, 19) über ein zwischengeordnetes zweites Federelement (43) an ein zwangsgeführtes Antriebselement (50) gekoppelt ist.

12. Bindeanordnung nach einem der vorherigen Ansprüche, **dadurch gekennzeichnet, dass** das Antriebselement ein Tasthebel (50, 51) ist, der mit einer an der Steuerwelle (6) angeordneten Kurvenbahn (55, 56, 57) zusammenwirkt und der über eine Koppelstange (41, 52, 53, 54) mit einem drehfest mit dem Klemmelement verbundenen Kurbelarm (40) zusammenwirkt, wobei das zweite Federelement (43) zwischen dem Tasthebel (50, 51) und dem Kurbelarm (40) zwischengeordnet ist.

13. Bindeanordnung nach einem der vorherigen Ansprüche, **dadurch gekennzeichnet, dass** das zweite Federelement (43) zwischen einem mit dem Kurbelarm (40) verbundenen ersten Stangenteil (42) der Koppelstange (41, 52, 53, 54) und einem demgegenüber auslenkbaren, mit dem Tasthebel (50, 51) verbundenen zweiten Stangenteil (47) zwischengeordnet ist.

14. Bindeanordnung nach einem der vorherigen Ansprüche, **dadurch gekennzeichnet, dass** die Schweiß-Schwenkachse (C) unterhalb der Schweißebene (S) angeordnet ist.

15. Ballenpresse (1), welche dazu eingerichtet ist, einen Erntegutballen (90) in einem Presskanal (3) zu formen und mit wenigstens einem strangförmigen Bindemittel zu umhüllen, aufweisend eine Bindeanordnung (10) nach einem der vorherigen Ansprüche.

## Claims

1. Binding arrangement (10) for a baler (1), which is designed to form a crop bale (90) in a pressing channel (3) and to envelop it using at least one strand-shaped binding agent, the binding arrangement (10) having a plurality of welding units (20) offset from one another with respect to a transverse axis (Y), each of which has an oscillatingly drivable friction head (22) for friction welding two strand portions (101-103) of at least one binding agent strand (100), the binding arrangement (10) having at least one welding motor (25) for driving the friction heads (22),
**characterized in that**
the binding arrangement (10) has a transmission (26) for the simultaneous drive connection of a welding motor (25) to a plurality of friction heads (22).

2. Binding arrangement according to claim 1, **characterized in that** the welding motor (25) is designed as a hydraulic motor.

3. Binding arrangement according to either of the preceding claims, **characterized in that** the transmission (26) has a distributor arrangement (27) which connects the welding motor (25) to a plurality of transmitting paths (31), each of which is coupled to a friction head (22).

4. Binding arrangement according to any of the preceding claims, **characterized in that** the friction heads (22) are spaced apart from the welding motor (25) with respect to a longitudinal axis (X), each transmitting path (31) having a transmitting shaft (34) extending at least partially along the longitudinal axis (X).

5. Binding arrangement according to any of the preceding claims, **characterized in that** the transmitting shaft (34) has a first shaft pulley (32) on the welding-motor side, which cooperates with a drive belt (29, 30) of the distributor arrangement (27).

6. Binding arrangement according to any of the preceding claims, **characterized in that** the distributor arrangement (27) has a welding-motor drive belt (29) which cooperates with a welding-motor pulley (28) coupled directly to the welding motor (25) and at least one first shaft pulley (32), and at least one shaft drive belt (30), which cooperates with two first shaft pulleys (32) while bypassing the welding-motor pulley (28).

7. Binding arrangement according to any of the preceding claims, **characterized in that** the transmitting shaft (34) has a second shaft pulley (33) on the friction head side, which acts via a friction head drive belt (35) on a friction head pulley (36) coupled to the friction head (22).

8. Binding arrangement according to any of the preceding claims, **characterized in that** a friction head carrier (21) carrying the friction head (22) is pivotable about a welding pivot axis (C) between a welding position, in which the friction head (22) is lowered to a welding plane (S) in which it acts on at least one strand portion (101-103), and a passive position, a belt tensioner (38) acting on the friction head drive belt (35), a pulley rotation axis (E) of the friction head pulley (36) being arranged in the welding position on one side of a plane (F) running through a transmitting-shaft rotation axis (D) of the transmitting shaft (34) and the welding pivot axis (C) and being displaced toward the plane (F) when adjusted to the passive position.

9. Binding arrangement according to any of the preceding claims, **characterized in that** this is designed in such a way that the welding motor (25) is activated before a control shaft (6), via which a deflection of at least one element of the binding arrangement (10) can be controlled during a binding process, is coupled to a drive motor and/or that the welding motor (25) is deactivated depending on a rotation angle of the control shaft (6).

10. Binding arrangement according to the preamble of claim 1 or according to any of the preceding claims,
**characterized in that**
each welding unit (20) is assigned a clamping unit (17), having two clamping elements (18, 19) interacting in a clamping position, a friction head carrier (21) carrying the friction head (22) and a clamping element (18, 19) being mounted coaxially so as to be pivotable about a welding pivot axis (C), the friction head carrier (21), during a closing movement of the clamping element (18, 19) that leads to the clamping position, being guidable via an intermediate first spring element (24) in such a way that it leads the clamping element (18, 19).

11. Binding arrangement according to any of the preceding claims, **characterized in that** the clamping element (18, 19) is coupled to a positively guided drive element (50) via an intermediate second spring element (43).

12. Binding arrangement according to any of the preceding claims, **characterized in that** the drive element is a feeler lever (50, 51) which cooperates with a curved track (55, 56, 57) arranged on the control shaft (6) and which cooperates via a coupling rod (41, 52, 53, 54) with a crank arm (40) connected to the clamping element for conjoint rotation, the second spring element (43) being arranged between the feeler lever (50, 51) and the crank arm (40).

13. Binding arrangement according to any of the preceding claims, **characterized in that** the second spring element (43) is arranged between a first rod part (42) of the coupling rod (41, 52, 53, 54) which is connected to the crank arm (40) and a second rod part (47) which is deflectable relative thereto and connected to the feeler lever (50, 51).

14. Binding arrangement according to any of the preceding claims, **characterized in that** the welding pivot axis (C) is arranged below the welding plane (S).

15. Baler (1) which is designed to form a crop bale (90) in a pressing channel (3) and to envelop it using at least one strand-shaped binding agent, comprising a binding arrangement (10) according to any of the preceding claims.

## Revendications

1. Agencement (10) de liage pour une presse (1) à balles, qui est agencée pour former une balle (90) de récolte dans un canal (3) de presse et pour l'envelopper d'au moins un agent de liage en forme de cordon, dans lequel l'agencement (10) de liage a une pluralité d'unités (20) de soudage décalées les unes des autres par rapport à un axe (Y) transversal, dont chacune a une tête (22) de friction pouvant être entraînée en oscillation pour le soudage par friction de deux tronçons (101-103) de cordon d'au moins un cordon (100) d'agent de liage, dans lequel l'agencement (10) de liage a au moins un moteur (25) de soudage pour l'entraînement des têtes (22) de friction,
**caractérisé en ce que**
l'agencement (10) de liage a une transmission (26) pour la liaison d'entraînement simultanée d'un moteur (25) de soudage avec une pluralité de têtes (22) de friction.

2. Agencement de liage suivant la revendication 1, **caractérisé en ce que** le moteur (25) de soudage est constitué sous la forme d'un moteur hydraulique.

3. Agencement de liage suivant l'une des revendications précédentes,
**caractérisé en ce que** la transmission (26) a un agencement (27) de répartition, qui relie le moteur (25) de soudage à une pluralité de chemins (31) de transmission, dont chacun est accouplé à une tête (22) de friction.

4. Agencement de liage suivant l'une des revendications précédentes,
**caractérisé en ce que** les têtes (22) de friction sont à distance, rapportée à un axe (X) longitudinal, du moteur (25) de soudage, dans lequel chaque chemin (31) de transmission a un arbre (34) de transmission s'étendant au moins en partie suivant l'axe (X) longitudinal.

5. Agencement de liage suivant l'une des revendications précédentes,
**caractérisé en ce que** l'arbre (34) de transmission a, du côté du moteur de soudage, une première poulie (32) d'arbre, qui coopère avec une courroie (29, 30) d'entraînement de l'agencement (27) de répartition.

6. Agencement de liage suivant l'une des revendications précédentes,
**caractérisé en ce que** l'agencement (27) de répartition a une courroie (29) d'entraînement de moteur de soudage, qui coopère avec une poulie (28) de moteur de soudage accouplée directement au moteur (25) de soudage et avec au moins une première poulie (32) d'arbre, ainsi qu'au moins une courroie (30) d'entraînement d'arbre, qui, en contournant la poulie (28) de moteur de soudage, coopère avec deux premières poulies (32) d'arbre.

7. Agencement de liage suivant l'une des revendications précédentes,
**caractérisé en ce que** l'arbre (34) de transmission a, du côté de la tête de friction, une deuxième poulie (33) d'arbre, qui agit par une courroie (35) d'entraînement de tête de friction sur une courroie (36) de tête de friction accouplée à la tête (22) de friction.

8. Agencement de liage suivant l'une des revendications précédentes,
**caractérisé en ce qu'**un support (21) de tête de friction, portant la tête (22) de friction, est monté pivotant autour d'un axe (C) de pivotement de soudage entre une position de soudage, dans laquelle la tête (22) de friction est abaissée à un plan (S) de soudage, dans lequel elle agit sur au moins un tronçon (101-103) de cordon, et une position passive, dans lequel un tendeur (38) de courroie agit sur la courroie (35) d'entraînement de tête de friction, dans lequel un axe (E) de rotation de la poulie (36) de tête de friction est monté dans la position de soudage d'un côté d'un plan (F) passant par l'axe (D) de rotation de l'arbre (34) de transmission et par l'axe (C) de pivotement de soudage et est, lors du passage dans la position passive, décalé vers le plan (F).

9. Agencement de liage suivant l'une des revendications précédentes,
**caractérisé en ce qu'**il est agencé de manière à effectuer une activation du moteur (25) de soudage, avant qu'un arbre (6) de commande, par lequel une déviation d'au moins un élément de l'agencement (10) de liage peut être commandé pendant une opération de liage, soit accouplé à un moteur d'entraînement et/ou **en ce qu'**une désactivation du moteur (25) de soudage a lieu en fonction d'un angle de rotation de l'arbre (6) de commande.

10. Agencement de liage suivant le préambule de la revendication 1 ou suivant l'une des revendications précédentes, **caractérisé en ce que**
à chaque unité (20) de soudage est affectée une unité (17) de serrage comprenant deux éléments (18, 19) de serrage coopérant dans une position de serrage, dans lequel un support (21) de tête de friction portant la tête (22) de friction et un élément (18, 19) de serrage sont montés avec possibilité de pivotement de manière coaxiale autour d'un axe (C) de pivotement de soudage, dans lequel le support (21) de tête de friction peut, lors d'un mouvement de fermeture, donnant la position de serrage, de l'élément (18, 19) de serrage, être entraîné par un premier élément (24) de ressort interposé de manière à ce qu'il soit en avance sur l'élément (18, 19) de serrage.

11. Agencement de liage suivant l'une des revendications précédentes,
**caractérisé en ce que** l'élément (18, 19) de serrage est, par un deuxième élément (43) de ressort interposé, accouplé à un élément (50) d'entraînement à guidage forcé.

12. Agencement de liage suivant l'une des revendications précédentes,
**caractérisé en ce que** l'élément d'entraînement est un levier (50, 51), qui coopère avec un chemin (55, 56, 57) incurvé disposé sur l'arbre (6) de commande et qui coopère par une barre (41, 52, 53, 54) d'accouplement avec un bras (40) de manivelle solidaire en rotation de l'élément de serrage, dans lequel le deuxième élément (43) de ressort est monté entre le levier (50, 51) et le bras (40) de manivelle.

13. Agencement de liage suivant l'une des revendications précédentes,
**caractérisé en ce que** le deuxième élément (43) de ressort est monté entre une première partie (42), reliée au bras (40) de manivelle, de la barre (41, 52, 53, 54) d'accouplement et une deuxième partie (47) de barre pouvant être déviée de la première et reliée au levier (50, 51).

14. Agencement de liage suivant l'une des revendications précédentes,
**caractérisé en ce que** l'axe (C) de pivotement de soudage est disposé en-dessous du plan (S) de soudage.

15. Presse (1) à balles, qui est agencée pour former une balle (90) de récolte dans un canal (3) de presse et pour l'envelopper d'au moins un agent de liage en forme de cordon, comportant un agencement (10) de liage suivant l'une des revendications précédentes.
